# EUROPÄISCHE PATENTSCHRIFT

(11) **EP 3 007 873 B1**
(45) Veröffentlichungstag und Bekanntmachung des Hinweises auf die Patenterteilung: **09.08.2017**
(21) Anmeldenummer: 14729591.9
(22) Anmeldetag: 05.06.2014
(51) Int. Cl.: C08J 5/24, B32B 27/08, B32B 27/12, B32B 27/34, B32B 27/32, B32B 7/06, B32B 7/12, B32B 27/18

(54) **PREPREGS**
PREPREGS
PRÉIMPRÉGNÉS

(30) Priorität: 11.06.2013 DE 102013009679
(43) Veröffentlichungstag der Anmeldung: 20.04.2016
(73) Patentinhaber: Infiana Germany GmbH & Co. KG, 91301 Forchheim (DE)
(72) Erfinder: HERMANN, Christian, 91330 Eggolsheim (DE); KELM, Roland, 91301 Forchheim (DE); SALEHI-SCHNEIDER, Soheila, 91088 Bubenreuth (DE)
(74) Vertreter: Kutzenberger, Helga
(86) Internationale Anmeldenummer: PCT/EP2014/001523
(87) Internationale Veröffentlichungsnummer: WO 2014/198392

(56) Entgegenhaltungen:
- DATABASE WPI Week 198634 Thomson Scientific, London, GB; AN 1986-222988 XP002728718, & JP S61 154812 A (TOHO RAYON KK) 14. Juli 1986 (1986-07-14)

## Beschreibung

Die vorliegende Erfindung betrifft einen Verbund aus
I einem Prepreg aus einer festen Mischung aus einem reaktiven Kunststoffharz und einem Verstärkungsmittel in Gewebe- oder Faserform und ggf. üblichen Additiven in Form einer ggf. aufgerollten, fortlaufenden Bahn und
II einer lösbaren Trennfolie umfassend einen mehrschichtigen Schichtaufbau aus
   a) einer direkt an die Prepreg-Bahn angrenzenden Release-Schicht, aufgebaut aus wenigstens einem thermoplastischen Homo- oder Copolymeren von α,β ungesättigten Olefinen mit einer wachsartigen Verbindung als Release-Additiv und ggf. üblichen weiteren Additiven und Hilfsstoffen,
   b) ggf. einer Haftvermittlerschicht,
   c) einer Schicht aufgebaut aus wenigstens einem thermoplastischen Polyamid-Homo- oder Copolymeren,
   d) ggf. einer Haftvermittlerschicht,
   e) einer Release-Schicht, die aus wenigstens einem thermoplastischen Homo- oder Copolymeren von α,β ungesättigten Olefinen aufgebaut ist und eine Release-Beschichtung basierend auf einem ausgehärteten Polysiloxan aufweist, oder
      alternativ zu der Schicht e) einen Teilschichtverbund aus
   e') einer Schicht, aufgebaut aus wenigstens einem thermoplastischen Homo- oder Copolymeren aus α,β ungesättigten Olefinen mit vorzugsweise 2 bis 10 C-Atomen, besonders bevorzugt von α,β ungesättigten Olefinen, mit wenigstens 3 C-Atomen
   f) einer Kaschier-Klebstoffschicht und
   g) einer vorzugsweise biaxial gereckten Release-Schicht, die aus wenigstens einem thermoplastischen Polyester und einer wachsartigen Verbindung als Release-Additiv und ggf. üblichen weiteren Additiven und Hilfsstoffen aufgebaut ist,
      oder alternativ zur Schicht g)
   g') einer vorzugsweise biaxial gereckten Release-Schicht, die aus wenigstens einem thermoplastischen Polyester aufgebaut ist und eine Releasebeschichtung basierend auf einem ausgehärteten Polysiloxan aufweist,
die Verwendung einer so aufgebauten, mehrschichtigen Folie als lösbare Trennfolie für ein Prepreg sowie die Verwendung des erfindungsgemäßen Verbundes zur Herstellung eines Verbundwerkstoffes, vorzugsweise eines
Faserverbundwerkstoffes.

Prepregs, d. h. feste Mischungen aus einem reaktiven Kunststoffharz und einem Verstärkungsmittel, insbesondere in Faserform, sind ein unverzichtbares Zwischenprodukt bei der Herstellung von Verbundwerkstoffen, insbesondere Faserverbundwerkstoffen, deren zunehmende Bedeutung in zahlreichen Industriezweigen, wie in der Luft- und Raumfahrttechnik, der Energie-Erzeugung mit Windrädern, Konstruktion von Fahrrädern, Zügen, Schiffen, aufgrund ihrer herausragenden Eigenschaftskombination aus relativ geringem Gewicht und einer herausragenden hohen Festigkeit begründet ist. Dadurch gelingt es in zunehmendem Maße, diese Verbundwerkstoffe anstelle von Kompaktwerkstoffen, wie Metallen, trotz der höheren Produktionskosten einzusetzen. Damit verbunden ist auch das Bestreben, die Herstellung solcher Verbundwerkstoffe möglichst effizient zu gestalten und insbesondere den Aufwand an Produktionshilfsmaterial so gering wie möglich zu halten.

Üblicherweise wird bei der Herstellung von Faserverbundwerkstoffen in mehreren Produktionsstufen gearbeitet, wobei die daraus resultierenden Zwischenprodukte ggf. auch über einen längeren Zeitraum gelagert werden müssen.

Prepregs sind bei dieser Produktion von Verbundwerkstoffen häufig das erste Zwischenprodukt, das ggf. nicht bei den Produzenten der Endprodukte, wie z. B. dem Hersteller von Flugzeugbauteilen, Rotorblättern für Windmühlen usw., gelagert wird. Dies bedeutet, dass sowohl bei einer Zwischenlagerung beim Hersteller der Prepregs als auch beim Verarbeiter der Prepregs zu Endprodukten notwendig ist, dass die Produkteigenschaften des Prepregs nicht beeinflusst werden und die Handhabung des Prepregs bei der Endverarbeitung möglichst nicht gestört wird.

Dazu wird bei der Herstellung von Prepregs, gemäß der das reaktive Kunststoffharz als Bindemittel mit dem Verstärkungsmaterial zu einer festen Mischung zusammengeführt wird, zum Schutz und für die ungestörte Weiterverarbeitung der Prepregs, diese Mischung auf ein wenigstens auf einer Oberfläche silikonisiertes Papier aufgebracht, das ggf. durch eine Polyethylen-Release-Folie als lösbare Schutz- und Trennfolie substituiert wird. Für zahlreiche Prepreg-Zusammensetzungen ist es darüber hinaus unverzichtbar, beide Oberflächen einer Prepreg-Bahn mit Release-Papier oder einer lösbaren Polyethylen-Folie als Trennfolie auszurüsten, um deren problemlose Weiterverarbeitung und Lagerung zu garantieren.

Vor der endgültigen Verarbeitung der Prepregs, d. h. vor ihrer endgültigen Formgebung, müssen diese Trennfolien entfernt werden, da in bestimmten Endprodukten je nach Gestaltung und Eigenschaftsprofil mehrere Prepregs zusammengeführt werden. Da die meisten Endverarbeitungsprozesse von Faserverbundwerkstoffen mittlerweile automatisiert sind, um die bestmöglichste Präzision der Formteile zu erhalten, dürfen keine Störungen der Prozessabläufe, durch z. B. Abriss der Trennfolien bei deren notwendigen Entfernung, erfolgen. Darüber hinaus wird zur Steigerung der Effizienz der Produktion angestrebt, das Ausmaß der abfallverursachenden Hilfsstoffe und deren Entfernung möglichst gering zu halten.

Aufgabe der vorliegenden Erfindung war es daher, einen Verbund aus einem Prepreg und einer lösbaren Trennfolie zur Verfügung zu stellen, der die Nachteile des Standes der Technik nicht aufweist.

Diese Aufgabe wird erfindungsgemäß gelöst durch Bereitstellung eines Verbundes aus
I einem Prepreg aus einer festen Mischung aus einem reaktiven Kunststoffharz und einem Verstärkungsmittel in Gewebe- oder Faserform und ggf. üblichen Additiven in Form einer ggf. aufgerollten, fortlaufenden Bahn und
II einer lösbaren Trennfolie umfassend einen mehrschichtigen Schichtaufbau aus
   a) einer direkt an die Prepreg-Bahn angrenzenden Release-Schicht, aufgebaut aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen, einer wachsartigen Verbindung als Release-Additiv und ggf. üblichen weiteren Additiven und Hilfsstoffen,
   b) ggf. einer Haftvermittlerschicht,
   c) einer Schicht aufgebaut aus wenigstens einem thermoplastischen Polyamid-Homo- oder Copolymeren,
   d) ggf. einer Haftvermittlerschicht,
   e) einer Release-Schicht, die aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen aufgebaut ist und eine Release-Beschichtung basierend auf einem ausgehärteten Polysiloxan aufweist oder
      alternativ zu der Schicht e) einem Teilschichtverbund aus
   e') einer Schicht aufgebaut aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen,
   f) einer Kaschier-Klebstoffschicht und
   g) einer vorzugsweise biaxial gereckten Release-Schicht, die entweder aus wenigstens einem thermoplastischen Polyester und einer wachsartigen Verbindung als Release-Additiv und ggf. üblichen weiteren Additiven und Hilfsstoffen aufgebaut ist, oder
   g') einer vorzugsweise biaxial gereckten Release-Schicht, die aus wenigstens einem thermoplastischen Polyester aufgebaut ist und eine Releasebeschichtung basierend auf einem ausgehärteten Polysiloxan alternativ zu der Schicht g) des Teilschichtverbunds
   aufweist.

Durch den Einsatz der erfindungsgemäß verwendeten Trennfolie gelingt es, Verbunde aus einem Prepreg und einer lösbaren Trennfolie herzustellen, wobei nur eine Folie für die Herstellung des erfindungsgemäßen Verbundes notwendig ist, da diese Trennfolie bereits als Trägerfolie bei der Herstellung der festen Mischung aus reaktivem Harz und Verstärkungsmittel zum Einsatz kommt und als Verbund in Form einer fortlaufenden Bahn zur Lagerung und bis zur weiteren Verarbeitung mit dem Prepreg lösbar verbunden bleibt. Entgegen den bisherigen Herstellungsverfahren von Prepregs ist es durch den Einsatz der erfindungsgemäß verwendeten Trennfolie nicht notwendig, ein Release-Papier gegen eine Polyethylentrennfolie vor der Lagerung auszutauschen oder beide Oberflächen der Prepregs-Bahn mit Release-Papier zur versehen, da die erfindungsgemäß zum Einsatz kommende mehrschichtige Trennfolie auf ihren beiden Oberflächen ausreichende Trenneigenschaften aufweist.

In einer besonders bevorzugten Ausführungsform weist die erfindungsgemäß verwendete Trennfolie eine unterschiedliche Release-Ausrüstung ihrer beiden Oberflächen a) und e) bzw. g') auf, wodurch ein Trennkraftverhältnis von e) bzw. g') zu a) von 1:2 - 1:15, vorzugsweise von 1:4 - 1:8 erzielt werden kann, d. h. die Schicht a) löst sich unterschiedlich von dem Prepreg im Vergleich zu der Schicht e) oder g'), wodurch es möglich ist, die beiden Oberflächen des Prepregs, während der Endbearbeitung entsprechend dem Verarbeitungsstatus unterschiedlich lange geschützt zu erhalten.

Da außerdem die erfindungsgemäß verwendete Trennfolie auf beiden Oberflächen lösbar ist, ist es auch nicht notwendig, wie bisher bei der Verarbeitung eine Release-Papier-Bahn und danach eine PE-Folie zur zwischenzeitlichen Abdeckung der Oberflächen des Prepregs aufzubringen. Eine solche kann bei der Herstellung der Prepregs zu den vorstehend aufgeführten Problemen, wie Abriss, wegen einer zu geringen mechanischer Stabilität und damit zur Produktionsunterbrechung führen.

Die erfindungsgemäß zum Einsatz kommenden Trennfolien zeichnen sich außerdem durch eine ausgezeichnete thermische Belastbarkeit in einem breiten Temperaturfenster während der Verarbeitung des Verbunds sowie durch sehr gute mechanische Festigkeit, insbesondere Reißfestigkeit, aus. Da überdies nur der Einsatz einer Folienbahn als Trennfolie notwendig ist, wird das Ausmaß an Abfallmengen gegenüber den vorbekannten Herstellungsverfahren von Prepregs drastisch verringert.

Zusätzlich wird durch den erfindungsgemäßen Einsatz der Trennfolie erreicht, dass nicht nur die sehr gute Weiterreißfestigkeit neben den Release-Eigenschaften bei der Verarbeitung der erfindungsgemäßen Verbunde zu den Endprodukten von großem Vorteil ist, sondern auch, dass jegliche Staubentwicklung durch das Silikontrennpapier vermieden wird. Da außerdem Papier und damit Silikontrennpapier eine große Empfindlichkeit gegen Feuchtigkeit hat, wodurch es zu Bahnabrissen beim Entfernen dieser Papiertrennfolien kommen kann, werden durch den erfindungsgemäßen Einsatz der mehrschichtigen Trennfolie als Bestandteil der erfindungsgemäßen Verbunde solche Störungen vermieden.

Zur Herstellung der Prepregs können als reaktive Kunststoffharze, vorzugsweise reaktive Kunststoffharze, die durch bekannte Reaktionen zu duroplastischen Kunststoffharzen umgesetzt werden, insbesondere reaktive Epoxidharze, reaktive, ungesättigte Polyesterharze, reaktive Polyurethanharze oder reaktive Phenolformaldehydharze, eingesetzt werden.
Dem Fachmann ist bekannt, dass solche reaktiven Kunststoffharze üblicherweise Reaktionsmittel, wie Reaktionsbeschleuniger, Katalysatoren, Starter, Vernetzungsmittel und/oder Monomere enthalten, die bei der Prepreg-Herstellung zumindest soweit reagieren, dass das noch immer reaktive Kunststoffharz als Bindemittel für das Verstärkungsmittel in Gewebe- oder Faserform zu einer festen Mischung führt. Dabei kann das reaktive Kunststoffharz zumindest in einem gewissen Ausmaß eine sogenannte Härtung durchlaufen. Diese Härtung wird durch unterschiedliche Reaktionsarten, wie radikalische Polymerisation, z. B. von ungesättigten Polyesterharzen, Polyaddition, wie bei Epoxidharzen oder Polykondensation, wie z. B. bei Phenolformaldehydharzen, erzielt. Solche Härtungsreaktionen können zwar bei der Prepreg-Herstellung bereits eingeleitet werden, erfolgen aber zu einem überwiegendem Maße erst bei der Endverwendung des Prepregs, wobei die Härtung der reaktiven Kunststoffharze zu einem dreidimensional vernetzten Polymeren, einem sogenannten duroplastischen Kunststoff weiter und zu Ende geführt wird.

Die Prepregs enthalten als Verstärkungsmittel Verstärkungsmittel in Gewebe- oder Faserform, vorzugsweise Verstärkungsmittel aus Textilglas, insbesondere Stapelfasern oder Rovings, aus Kohlenstofffasern oder Aramid-Fasern in Gewebeform oder Strängen aus parallelen Spinnfäden oder Endlosfasern oder in Form von Einzelfasern von kleinem Durchmesser und geringer Länge.

Das Prepreg ist mit einer Trennfolie lösbar verbunden und wird von dieser üblicherweise erst bei der Endverarbeitung des Prepregs getrennt.

Diese erfindungsgemäß zum Einsatz kommende Trennfolie umfasst einen mehrschichtigen Schichtaufbau aus
a) einer direkt an die Prepreg-Bahn angrenzenden Release-Schicht, aufgebaut aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen, einer wachsartigen Verbindung als Release-Additiv und ggf. üblichen weiteren Additiven und Hilfsstoffen,
b) ggf. einer Haftvermittlerschicht,
c) einer Schicht aufgebaut aus wenigstens einem thermoplastischen Polyamid-Homo- oder Copolymeren,
d) ggf. einer Haftvermittlerschicht,
e) einer Release-Schicht, die aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen aufgebaut ist, und eine Release-Beschichtung basierend auf einem ausgehärteten Polysiloxan aufweist oder
   alternativ zu der Schicht e)
   einem Teilschichtverbund aus
e') einer Schicht aufgebaut aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen,
f) einer Kaschier-Klebstoffschicht und
g) einer vorzugsweise biaxial gereckten Release-Schicht, die aus wenigstens einem thermoplastischen Polyester und einer wachsartigen Verbindung als Release-Additiv und ggf. üblichen weiteren Additiven und Hilfsstoffen aufgebaut ist,
   oder
g') einer vorzugsweise biaxial gereckten Release-Schicht, die aus wenigstens einem thermoplastischen Polyester aufgebaut ist und eine Release-Beschichtung basierend auf einem ausgehärteten Polysiloxan alternativ zu der Schicht g) des Teilverbunds aufweist.

Diese mehrschichtige Trennfolie eignet sich vorzüglich nicht nur für die Herstellung von Verbunden mit Prepregs, sondern auch für deren Lagerung und Weiterverarbeitung, da der Einsatz dieser Trennfolie die vorstehend genannten Vorteile in der Herstellung und Verarbeitung von erfindungsgemäßen Verbunden garantiert.

Bei dieser Trennfolie ist die Schicht a) eine Release-Schicht, die direkt an das Prepreg lösbar angrenzt und aus wenigstens einem thermoplastischen Homo- oder Copolymer von α, β ungesättigten Olefinen mit vorzugsweise 2 bis 10 C-Atomen, besonders bevorzugt von α, β ungesättigten Olefinen mit wenigstens 3 C-Atomen und wenigstens einer wachsartigen Verbindung als Release-Additiv sowie gegebenen, üblichen weiteren Additiven und Hilfsstoffen aufgebaut ist.

Zum Aufbau der Release-Schicht a), der Release-Schicht e) sowie der Schicht e') eignen sich die genannten thermoplastische Olefin- Homo- oder Copolymere mit einem Schmelzpunkt von wenigstens 125 °C, vorzugsweise thermoplastische Olefin-Homo-oder Copolymere von α,β-ungesättigten Olefinen mit 2-10 Kohlenstoffatomen wie z.B. Polyethylen, insbesondere HDPE, Polypropylen (PP), Polybutylen (PB), Polyisobutylen (PI) oder Mischungen aus wenigstens zwei der genannten Polymere. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Bevorzugte Polyolefine zur Herstellung der Schicht (a) sind HDPE, Homo- oder Copolymere von Propylen, besonders bevorzugt Polypropylen oder ein Ethylen/Propylen-Copolymeres.

Die Schichten a), e) und e') können aus demselben thermoplastischen Homo- oder Copolymeren aufgebaut sein.

Die Dicke dieser Schichten beträgt vorzugsweise jeweils 5 bis 60 µm, insbesondere 10 bis 50 µm, wobei vorzugsweise die Schicht a), e), e') dieselbe Schichtdicke aufweist.

Zur Erzielung der notwendigen Trenneigenschaften der erfindungsgemäß zum Einsatz kommenden Trennfolie, die nicht nur mit dem Prepreg, sondern auch ggf. noch mit den ausgehärteten Prepregs, d. h. dem Faserverbundwerkstoff, lösbar verbunden ist, wird die Schicht a) und die Schicht g) jeweils mit wenigstens einer wachsartigen Verbindung als Release-Additiv dotiert bzw. liegt als Oberflächenausrüstung der Schicht a) bzw. oder der Schicht g) vor.

Als Release-Additiv können zur Erzielung der erforderlichen Trennwirkung der erfindungsgemäß zum Einsatz kommenden Trennfolie vorzugsweise wachsartige Verbindungen, die vorzugsweise lipophil sind, eingesetzt werden.

Als Wachs wird eine Vielzahl chemisch unterschiedlicher Verbindungen bezeichnet, welche durch ihre mechanisch-physikalischen Eigenschaften als Wachs definiert werden. Zu diesen Eigenschaften zählen eine Knetbarkeit bei 20°C, eine stark temperaturabhängige Konsistenz und Löslichkeit, Polierbarkeit unter leichtem Druck, das Schmelzen oberhalb von 40°C ohne Zersetzung, das Vorhandensein einer grob- bis feinkristallinen Struktur, eine geringe Viskosität oberhalb des Schmelzpunktes, eine durchscheinende bis opake aber nicht glasartige Färbung sowie eine feste bis brüchige Härte. Besonders bevorzugte wachsartige Verbindungen sind ausgewählt aus der Gruppe umfassend Fettsäuren, Fettalkohole, langkettige Amine, Fettsäureester und Fettsäureamide.

In einer bevorzugten Ausführungsform weist die erfindungsgemäß zum Einsatz kommende Trennfolie als wachsartige, vorzugsweise lipophile Verbindung wenigstens eine Verbindung ausgewählt aus der Gruppe umfassend Fettsäuren, vorzugsweise C₇₋₃₀-Alkyl- und C₇₋₃₀-Alkenyl-Fettsäuren, Fettalkohole, vorzugsweise C₇₋₃₀-Alkyl- und C₇₋₃₀-Alkenyl-Fettalkohole, langkettige Amine, vorzugsweise C₇₋₃₀-Alkyl- und C₇₋₃₀-Alkenyl-Amine, Fettsäureester und Fettsäureamide auf, deren Erweichungs- bzw. Schmelzpunkt bei Normaldruck bei mindestens 30°C, vorzugsweise mindestens 50°C, besonders bevorzugt mindestens 80°C, ganz besonders bevorzugt mindestens 100°C, liegt.

Der Ausdruck "Alkyl" bzw."C₇₋₃₀-Alkyl" umfasst im Sinne der vorliegenden Erfindung C₇₋₃₀-Alkanyle, d.h. acyclische, gesättigte, aliphatische Kohlenwasserstoffreste, die verzweigt oder unverzweigt sein können, mit 7 bis 30 C-Atomen, d.h. mit 7, 8, 9, 10, 11, 12, 13, 14, 15, 16, 17, 18, 19, 20, 21, 22, 23, 24, 25, 26, 27, 28, 29 oder 30 C-Atomen. Vorzugsweise ist C₇₋₃₀-Alkyl aus der Gruppe ausgewählt, die n-Heptyl, n-Octyl, n-Nonyl, n-Decyl, Undecyl, Dodecyl, Tridecyl, Tetradecyl, Pentadecyl, Hexadecyl, Heptadecyl, Octadecyl, Nonadecyl, Eicosyl, Henicosyl, Docosyl, Tricosyl, Tetracosyl, Pentacosyl, Hexacosyl, Heptacosyl, Octacosyl, Nonacosyl und Triacontyl umfasst. Ein besonders bevorzugtes C₇₋₃₀-Alkyl ist ein C₁₁₋₂₀-Alkyl, d.h. ein C₁₁₋₂₀-Alkanyl mit 11 bis 20 C-Atomen, d.h. mit 11, 12, 13, 14, 15, 16, 17, 18, 19 oder 20 C-Atomen. Ein ganz besonders bevorzugtes C₇₋₃₀-Alkyl ist ein C₁₄₋₂₀-Alkyl, d.h. ein C₁₄₋₂₀-Alkanyl mit 14 bis 20 C-Atomen, d.h. mit 14, 15, 16, 17, 18, 10 oder 20 C-Atomen.

Der Ausdruck "Alkenyl" bzw."C₇₋₃₀-Alkenyl" umfasst im Sinne der vorliegenden Erfindung C₇₋₃₀-Alkenyle, d.h. acyclische ungesättigte aliphatische Kohlenwasserstoffreste, die verzweigt oder unverzweigt sein können, mit 7 bis 30 C-Atomen, d.h. mit 7, 8, 9, 10, 11, 12, 13, 14, 15, 16, 17, 18, 19, 20, 21, 22, 23, 24, 25, 26, 27, 28, 29 oder 30 C-Atomen. Alkenyle weisen mindestens eine, ggf. auch 2, 3, 4, 5 oder 6 C=C-Doppelbindungen auf.

Vorzugsweise ist Alkenyl aus der Gruppe ausgewählt, die n-Heptenyl, n-Octenyl, n-Nonenyl, n-Decenyl, Undecenyl, Dodecenyl, Tridecenyl, Tetradecenyl, Pentadecenyl, Hexadecenyl, Heptadecenyl, Octadecenyl, Nonadecenyl, Eicosenyl, Henicosenyl, Docosenyl, Tricosenyl, Tetracosenyl, Pentacosenyl, Hexacosenyl, Heptacosenyl, Octacosenyl, Nonacosenyl und Triacontenyl umfasst. Ein besonders bevorzugtes C₇₋₃₀-Alkenyl ist ein C₁₁₋₂₀-Alkenyl mit 11 bis 20 C-Atomen, d.h. mit 11, 12, 13, 14, 15, 16, 17, 18, 19 oder 20 C-Atomen. Ein ganz besonders bevorzugtes C₇₋₃₀-Alkenyl ist ein C₁₄₋₂₀-Alkenyl mit 14 bis 20 C-Atomen, d.h. mit 14, 15, 16, 17, 18, 19 oder 20 C-Atomen.

Unter einem "Fettsäureester" wird im Sinne dieser Erfindung zum einen ein Ester eines ein- oder mehrwertigen, d.h. z.B. eines zwei-, drei-, vier- oder fünfwertigen Alkohols verstanden, wobei wenigstens eine der Alkoholfunktionen eines solchen mehrwertigen Alkohols mit einer aliphatischen, verzweigten oder unverzweigten, gesättigten oder ungesättigten Fettsäure, vorzugsweise mit einer C₇₋₃₀-Alkyl- oder einer C₇₋₃₀-Alkenyl-Fettsäure verestert ist. Sind mehrere Alkoholfunktionen des mehrwertigen Alkohols mit Fettsäuren verestert, so können diese Alkoholfunktionen jeweils unabhängig voneinander mit unterschiedlichen Fettsäuren verestert sein. Bevorzugte mehrwertige Alkohole sind Ethylenglycol, Glycerin (Glycerol) und 1,4-Butandiol. Besonders bevorzugt sind Ethylenglycol und Glycerin. Ein Glycerinfettsäureester umfasst somit Monoglyceride, Diglyceride und Triglyceride. Es wird unter einem "Fettsäureester" im Sinne der vorliegenden Erfindung auch ein Ester einer ein- oder mehrwertigen, d.h. z.B. einer zwei-, drei-, vier- oder fünfwertigen Carbonsäure verstanden, wobei wenigstens eine der Carbonsäurefunktionen einer solchen mehrwertigen Carbonsäure mit einem aliphatischen, verzweigten oder unverzweigten, gesättigten oder ungesättigten Fettalkohol, vorzugsweise mit wenigstens einem C₇₋₃₀-Alkyl- oder wenigstens einemC₇₋₃₀-Alkenyl-Fettalkohol verestert ist. Bevorzugte Fettsäureester sind z.B. Ethylen-bis-palmitylester, Ethylen-palmityl-stearylester und Ethylen-bis-stearylester.

Unter einem "Fettsäureamid " wird im Sinne der vorliegenden Erfindung ein Amid eines ein- oder mehrwertigen, d.h. z.B. eines zwei-, drei-, vier- oder fünfwertigen Amins verstanden, wobei wenigstens eine der Aminfunktionen eines solchen mehrwertigen Amins mit einer aliphatischen, verzweigten oder unverzweigten, gesättigten oder ungesättigten Fettsäure, vorzugsweise mit einer C₇₋₃₀-Alkyl- oder einer C₇₋₃₀-Alkenyl-Fettsäure eine Amidbindung eingegangen ist. Sind mehrere Aminfunktionen des mehrwertigen Amins mit Fettsäuren zu Amidbindungen verknüpft, so können diese Aminfunktionen jeweils unabhängig voneinander mit unterschiedlichen Fettsäuren zu Amidbindungen verknüpft sein. Ein bevorzugtes mehrwertiges Amin ist z.B. Ethylendiamin. Es wird unter einem "Fettsäureamid" im Sinne der vorliegenden Erfindung auch ein Amid einer ein- oder mehrwertigen, d.h. z.B. einer zwei-, drei-, vier- oder fünfwertigen Carbonsäure verstanden, wobei wenigstens eine der Carbonsäurefunktionen einer solchen mehrwertigen Carbonsäure mit einem aliphatischen, verzweigten oder unverzweigten, gesättigten oder ungesättigten Amin, vorzugsweise mit wenigstens einem C₇₋₃₀-Alkyl- oder wenigstens einem C₇₋₃₀-Alkenyl-Amin amidiert ist. Bevorzugte Fettsäureamide sind z.B. Ethylen-bis-palmitylamid, Ethylen-palmitylstearylamid und Ethylen-bis-stearylamid. Ein besonders bevorzugtes Fettsäureamid ist Ethylen-bis-stearylamid (N,N'-Ethylen-bis-stearinsäureamid).

In der Schicht a) bzw. g) können jeweils das Release-Additiv in einer Menge von 1 bis 20 Gew.%, vorzugsweise 2 bis 15 Gew.%, besonders bevorzugt 2 bis 6 Gew.%, bezogen auf das Gesamtgewicht der jeweiligen Schicht, vorliegen. Die genannten Release-additivhaltigen Schichten können jeweils unterschiedliche Mengen des Release-Additiven, vorzugsweise jeweils dieselbe Menge Release-Additiv enthalten.

Wie bereits erwähnt, kann das Release-Additiv auch als Ausrüstung auf der Oberfläche der jeweils genannten Schichten a) und g), sofern diese eine Oberflächenschicht darstellen, als Ausrüstung vorliegen. Unter dem Begriff "Ausrüstung" im Sinne der vorliegenden Verbindung wird verstanden, dass auf einer solchen Release-Schicht der erfindungsgemäß zum Einsatz kommenden Trennfolie eine Beschichtung oder Belegung basierend auf wenigstens einem Release-Additiv vorliegt. Dazu kann die jeweilige Schicht mit der wachshaltigen Verbindung beschichtet sein oder eine Belegung durch Migration von wenigstens einer wachsartigen, vorzugsweise lipophilen Verbindung, aufweisen.

Als Oberflächenschichten können die Release-Schichten übliche Additive wie Stabilisatoren, Antiblockmittel, Antistatika und/oder Gleitmittel enthalten.

Die erfindungsgemäß zum Einsatz kommende Trennfolie weist auch eine vorzugsweise über Haftvermittlerschichten mit der Schicht a) bzw. e) oder e') verbundene Polyamidschicht c) auf.

Zur Herstellung der Schicht c) sind thermoplastische aliphatische, teilaromatische oder aromatische Polyamid Homo-oder Copolymere geeignet. Solche Polyamide sind Polyamide aus wenigstens einem Diamin wie einem aliphatischen Diamin mit 2-10 Kohlenstoffatomen, insbesondere Hexamethylendiamin und/oder Isophorondiamin, oder wenigstens einem aromatischen Diamin mit 6-10 Kohlenstoffatomen, insbesondere p-Phenylendiamin, und Dicarbonsäuren wie wenigstens einer aliphatischen oder aromatischen Dicarbonsäure mit 6-14 Kohlenstoffatomen wie z.B. Adipinsäure, Terephthalsäure (T) und/oder Isophthalsäure (I). Weiterhin können die Polyamide aus Lactamen mit 4-10 Kohlenstoffatomen wie z.B. ε-Caprolactam hergestellt worden sein. Besonders geeignete Polyamide zur Herstellung der Schicht c) sind z.B. PA 6, PA 12, PA 66, PA 61, PA 6T und/oder Mischungen aus wenigstens zwei der genannten Polyamide.

Die Polyamidschicht hat vorzugsweise eine Dicke von 5 bis 40 µm, besonders bevorzugt von 8 bis 30 µm. Die ggf. vorhandenen Haftvermittlerschichten b) und d) der erfindungsgemäß zum Einsatz kommenden Trennfolie basieren bevorzugt jeweils auf wenigstens einem modifizierten, thermoplastischen Olefin-Homo-oder Copolymer.

Zur Herstellung der Haftvermittlerschichten b) und d) eignen sich vorzugsweise modifizierte thermoplastische Olefin-Homo- oder Copolymere von α,β-ungesättigten Olefinen mit 2-10 C-Atomen wie z.B. Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Ein bevorzugtes thermoplastisches modifiziertes Olefin-Homo- oder Copolymer zur Herstellung der Haftvermittlerschichten b) und d) ist modifiziertes Propylen-Homopolymer (z). Vorzugsweise sind die thermoplastischen Olefin-Homo-oder Copolymere mit polaren Gruppen, vorzugsweise mit organischen SäureGruppen (Carboxyl-Gruppen) und/oder organischen Säureanhydrid-Gruppen, besonders bevorzugt Maleinsäureanhydrid-Gruppen modifiziert. Ganz besonders bevorzugt eignet sich als Haftvermittlerkomponente ein Polypropylen, das mit Maleinsäureanhydridgruppen modifiziert ist.

Als polymere Komponente der Haftvermittlerschichten kann auch ein Olefin/Alkyl(meth)acrylat-Copolymer zum Einsatz kommen.

Diese Copolymere aus einem α,β-ungesättigten Olefin und wenigstens einem weiteren α,β-ungesättigten Monomeren mit wenigstens einer Ester-Gruppe, bevorzugt einer Alkyl(meth)acrylatgruppe, sind wenigstens eine Verbindung ausgewählt aus der Gruppe umfassend Copolymere von 1 - 6 Alkyl(meth)acrylaten, vorzugsweise Methyl(meth)acrylat, Ethyl(meth)acrylat, n- und Isopropyl(meth)acrylat, n- und Iso-Butyl(meth)acrylat, tert.-Butyl(meth)acrylat, 2-Ethylhexyl(meth)acrylat, Cyclohexyl(meth)acrylat und Isobornyl(meth)acrylat, besonders bevorzugt Butyl(meth)acrylat, mit α,β-ungesättigten Olefinen mit vorzugsweise 1 - 8 C-Atomen, besonders bevorzugt Ethylen, Propylen.

Vorzugsweise liegt als Copolymeres der Haftvermittlerkomponente ein Ethylen-C₁₋₄-Alkylacrylat-Copolymeres, besonders bevorzugt ein Ethylen-Butylacrylat-Copolymeres, vorzugsweise in einer Menge bis zu 40 Gew.%, bezogen jeweils auf das Gesamtgewicht einer Haftvermittlerschicht, vor.

Die Haftvermittlerschichten b) und d) der erfindungsgemäß zum Einsatz kommenden Trennfolie weisen, jeweils unabhängig voneinander, vorzugsweise eine Schichtdicke von 1 µm bis 30 µm, besonders bevorzugt von 2 µm bis 17 µm, auf.

In einer bevorzugten Ausführungsform der erfindungsgemäß zum Einsatz kommenden Trennfolie liegen die Haftvermittlerschichten b) und d) vor und weisen einen identischen Schichtaufbau, vorzugsweise eine identische Schichtdicke und/oder identische Polymer-Komponenten, auf.

Die erfindungsgemäß zum Einsatz kommende mehrschichtige Trennfolie kann vorzugsweise einen Teilschichtverbund aus den Schichten e') bis g') statt nur der Schicht e) aufweisen, sofern bei der Herstellung des Prepregs der Verbund einer ggf. auch nur kurzzeitigen Zugbelastung oder bei Prozessstörungen über einen längeren Zeitraum Temperaturen über 130°C ausgesetzt wird, um die notwendige thermische Stabilität über ein möglichst breites Temperaturfenster zu gewährleisten.

Dazu weist die erfindungsgemäß zum Einsatz kommende Trennfolie statt der Schicht e) einen über eine Kaschier-Klebstoffschicht f) mit der Schicht e') und mit der Oberflächenschicht g) oder alternativ mit der Schicht g') verbundenen Teilverbund auf.

Die Schicht g) bzw. g') ist vorzugsweise biaxial gereckt, um die Festigkeit der Schicht zu erhöhen und weist durch Dotierung mit einem Release-Additiv bzw. einer Release-Beschichtung aus ausgehärtetem Polysiloxan eine ausreichende, aber jeweils unterschiedlich hohe Trennwirkung bei der Weiterverarbeitung von beispielsweise gestapelten Prepreg-Bahnen im Zuge der Weiterverarbeitung von Prepreg-Bahnen auf.

Die zur Herstellung der Kaschier-Klebestoffschicht benötigten Kaschier-Klebstoffe sind dem Fachmann bekannt und können vorzugsweise aus Zweikomponenten-Polyurethan-Klebstoffen aufgebaut sein.

Als Polyester zur Herstellung der Schicht g) bzw. g') können thermoplastische, aliphatische, teilaromatische oder aromatische Polyester Homo-oder Copolymere eingesetzt werden. Solche Polyester können sich von aliphatischen Diolen, wie z.B. Ethylenglycol oder 1,4-Butandiol und aliphatischen oder aromatischen Dicarbonsäuren oder Dicarbonsäure-Derivaten, vorzugsweise Adipinsäure, Isophtalsäure und/oder Terephthalsäure ableiten. Erfindungsgemäß können zur Herstellung der Schicht g) bzw. g') Polybutylenadipat (PBA), Polyethylenterephthalat (PET), Polyethylenisophthalat, Polybutylenterephthalat (PBT) oder entsprechende Copolyester verwendet werden.

Um die notwendigen Release-Eigenschaften der erfindungsgemäß zum Einsatz kommenden Trennfolie gegenüber stark klebrigen Prepregs zu erzielen, weist die erfindungsgemäß zum Einsatz kommende Trennfolie auf der Oberfläche der Schicht e) bzw. der Schicht g') eine Release-Beschichtung auf. Vorzugsweise basiert die Release-Schicht auf wenigstens einem ausgehärteten Polysiloxan.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das erfindungsgemäße ausgehärtete Polysiloxan auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist das erfindungsgemäß eingesetzte Polysiloxan eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die Release-Beschichtung basiert vorzugsweise auf wenigstens einem ausgehärteten, d.h. vernetzten Polysiloxan ausgewählt aus der Gruppe umfassend additionsvernetzte, vorzugsweise metallkatalysiert additionsvernetzte, kondensationsvernetzte, radikalisch vernetzte, kationisch vernetzte und/oder durch Feuchtigkeitseinwirkung vernetzte Polysiloxane.

Vorzugsweise basiert die Release-Beschichtung auf wenigstens einem ausgehärteten Polysiloxan, das durch thermische Aushärtung, durch Aushärtung mit elektromagnetischer Strahlung, vorzugsweise durch UV-Strahlung, oder durch Feuchtigkeitseinwirkung ausgehärtet wurde. Bevorzugt basiert die Release-Beschichtung der erfindungsgemäß zum Einsatz kommenden Trennfolie auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die jeweils ausgehärtet sind.

Thermisch ausgehärtete Polysiloxane werden durch thermische Hydrosilylierung von Silan-Funktionen aufweisenden Polysiloxanen mit einer zumindest eine Kohlenstoff-Doppelbindung aufweisenden Verbindung erhalten. Bei den durch elektromagnetische Strahlung ausgehärteten Polysiloxanen ist die Vernetzung der Polysiloxane durch elektromagnetische Strahlung, vorzugsweise durch UV-Strahlung, erfolgt. Die durch Einwirkung von Feuchtigkeit, vorzugsweise von Wasser, vernetzten Polysiloxanen werden durch eine Polykondensationsreaktion erhalten, bei der wenigstens eine Silan-Funktion und wenigstens eine Alkoxy-Gruppe oder wenigstens eine Alkoxysilan-Gruppe unter Abspaltung wenigstens eines Moleküls Alkohol eine Si-O-Bindung ausbilden. Die auszuhärtenden Polysiloxane weisen daher jeweils die für die Vernetzung benötigten miteinander reagierenden funktionellen Gruppen auf.

Die Release-Beschichtung der erfindungsgemäß zum Einsatz kommenden Trennfolie weist vorzugsweise eine Schichtdicke von 0,1 µm bis ≤ 3 µm, vorzugsweise von 0,2 µm bis 1,5 µm auf.

Die erfindungsgemäß zum Einsatz kommende Trennfolie kann ggf. auch auf der Oberfläche der Schicht a) mit einer Release-Schicht auf Basis eines genannten ausgehärteten Polysiloxans statt der Dotierung mit einem Release-Additiv ausgerüstet sein.

Die Herstellung von Prepregs, d. h. von festen Mischungen aus einem reaktiven Kunststoffharz und einem Verstärkungsmittel in Gewebe- oder Faserform und ggf. üblichen Additiven als fortlaufende Bahn unter Einsatz von Trennfolien, wie SilikonTrennpapier und Polyethylentrennfolien, ist, wie bereits ausgeführt, als gängige Verfahrensweise bekannt. Dazu wird vorzugsweise das Verstärkungsmittel in Gewebe- oder Faserform, vorzugsweise ein Textilglas als Stapelfaser oder Rovings, Kohlenstofffaser oder Aramid-Fasern kontinuierlich mit dem reaktiven Kunststoffharz zusammengeführt, wobei es zur Herstellung der festen Mischung ausreicht, dass die Viskosität des reaktiven Kunststoffharzes so hoch ist, dass das Harz eine zähflüssige Masse ergibt oder das reaktive Kunststoffharz in einem Ofen zusammen mit dem Verstärkungsmittel in ein solches Stadium gebracht wird oder mit Hilfe eines geeigneten Lösungsmittels in Lösung mit einer solchen Viskosität gebracht wird. Das Verstärkungsmittel wird zusammen mit dem reaktiven Kunststoffharz auf ein Silikontrennpapier aufgebracht und in einem Ofen unter einer Minute, ggf. unter Druckeinwirkung erwärmt, um nach dem Verlassen des Ofens in einer Matrix aus reaktivem Kunststoffharz und notwendigen Reaktionsmitteln, wie Härter und/oder Beschleunigern sowie Farbstoffen und anderen Hilfsstoffen ein eingebettetes Verstärkungsmittel zu ergeben.

Um die bereits genannten Schwierigkeiten und Nachteile, die beim Einsatz von Silikontrennpapieren als Trägerschicht auftreten können, zu vermeiden, wird bei dem bekannten Herstellungsverfahren das Silikontrennpapier vom Prepreg entfernt und als Trennfolie eine Polyethylentrennfolie mit dem Prepreg in Bahnform aufgerollt.

Eine solche Polyethylentrennfolie kann aber wegen zu geringer Zugfestigkeit nicht bereits bei der Herstellung der Prepreg eingesetzt werden.

Mit der erfindungsgemäß zum Einsatz kommenden mehrschichtigen Trennfolie werden sowohl die bei der Herstellung und Weiterverarbeitung der Prepreg bekannten Probleme behoben, so dass sich diese Trennfolie hervorragend zur Herstellung von Verbunden in bahnförmiger Form aus einem Prepreg und der erfindungsgemäß zum Einsatz kommenden Trennfolie eignet.

Solche erfindungsgemäßen Verbunde aus einem Prepreg und der vorstehend beschriebenen Trennfolie erleichtern auch die Verwendung eines solchen Verbundes zur Herstellung von Konstruktionsbauteilen aus Verbundwerkstoffen, die insbesondere als Bauteile in der Flugzeugindustrie, für Windräder, für Sportartikel, Schiffe, Züge und andere Transportmittel zum Einsatz kommen, da bei der Herstellung bzw. der Weiterverarbeitung solcher Verbunde, vorzugsweise in Form einer fortlaufenden Bahn, es weder zur einer Staubentwicklung durch ein Silikontrennpapier kommen kann, noch bei der Endverwertung der ausgehärteten Prepregs zu einer Produktionsunterbrechung und Bauteilbeschädigung durch schwierige oder ungenügende Entfernung der zu entfernenden Trennfolie kommt. Diese Verwendung des erfindungsgemäßen Verbundes ist ein weiterer Gegenstand der vorliegenden Erfindung.

Dem Fachmann sind die Aushärtbedingungen der unterschiedlichen reaktiven Kunststoffharze, die Dotierung mit Reaktionsmitteln zur Härtung und die jeweilige Verfahrensweise sowie der Aufbau der Konstruktionsbauteile bekannt.

Ein weiterer Gegenstand der vorliegenden Erfindung ist daher die Verwendung der erfindungsgemäß zum Einsatz kommenden, mehrschichtigen Trennfolie zur Herstellung eines erfindungsgemäßen Verbundes mit einem Prepreg, vorzugsweise in Form einer ggf. aufgerollten, fortlaufenden Bahn, wobei der erfindungsgemäße Verbund, vorzugsweise unter 20°C gekühlt und ggf. feuchtigkeitsdicht verpackt, mindestens ein halbes Jahr lagerstabil ist.

## Patentansprüche

1. Ein Verbund aus
I einem Prepreg aus einer festen Mischung aus einem reaktiven Kunststoffharz und einem Verstärkungsmittel in Gewebe- oder Faserform und ggf. üblichen Additiven in Form einer ggf. aufgerollten, fortlaufenden Bahn und
II einer lösbaren Trennfolie umfassend einen mehrschichtigen Schichtaufbau aus
a) einer direkt an die Prepreg-Bahn angrenzenden Release-Schicht, aufgebaut aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen, einer wachsartigen Verbindung als Release-Additiv und ggf. üblichen weiteren Additiven und Hilfsstoffen,
b) ggf. einer Haftvermittlerschicht,
c) einer Schicht aufgebaut aus wenigstens einem thermoplastischen Polyamid-Homo- oder Copolymeren,
d) ggf. einer Haftvermittlerschicht,
e) einer Release-Schicht, die aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen aufgebaut ist und eine Release-Beschichtung basierend auf einem ausgehärteten Polysiloxan aufweist, oder
alternativ zur Schicht e) einem Teilschichtverbund aus
e') einer Schicht aufgebaut aus wenigstens einem thermoplastischen Homo- oder Copolymeren von α,β ungesättigten Olefinen mit vorzugsweise 2 bis 10 C-Atomen, besonders bevorzugt von α,β ungesättigten Olefinen mit wenigstens 3 C-Atomen,
f) einer Kaschier-Klebstoffschicht und
g) einer vorzugsweise biaxial gereckten Release-Schicht, die aus wenigstens einem thermoplastischen Polyester und einer wachsartigen Verbindung als Release-Additiv und ggf. üblichen weiteren Additiven und Hilfsstoffen aufgebaut ist, oder
g') einer vorzugsweise biaxial gereckten Release-Schicht, die aus wenigstens einem thermoplastischen Polyester aufgebaut ist und eine Release-Beschichtung basierend auf einem ausgehärteten Polysiloxan alternativ zur Schicht g) des Teilschichtverbunds aufweist.

2. Ein Verbund nach Anspruch 1, **dadurch gekennzeichnet, dass** das Prepreg I aus einer festen Mischung aus einem reaktiven Kunststoffharz und einem Verstärkungsmittel in Gewebe- oder Faserform und üblichen Additiven besteht.

3. Ein Verbund nach Anspruch 1 oder 2, **dadurch gekennzeichnet, dass** das Prepreg I aus einer festen Mischung aus einem reaktiven Kunststoffharz, vorzugsweise aus einem reaktiven, duroplastischen Kunststoffharz, besonders bevorzugt einem reaktiven Epoxyd-Harz, reaktivem ungesättigten PolyesterHarz, reaktivem Polyurethan-Harz oder reaktivem Phenolformaldehyd-Harz, und einem Verstärkungsmittel aus Textilglas, vorzugsweise Stapelfasern oder Rovings, Kohlenstofffasern oder Aramid-Fasern, Additiven als Reaktionsmitteln, vorzugsweise Vernetzungsmitteln, Beschleunigungsmittel, Katalysatoren und ggf. α,β ungesättigten Monomeren, und ggf. Füllstoffen besteht.

4. Ein Verbund nach einem der Ansprüche 1 bis 3, **dadurch gekennzeichnet, dass** die Release-Schicht a), die Schicht e) und die Schicht e') jeweils aus wenigstens einem thermoplastischen Homo- oder Copolymeren von α,β ungesättigten Olefinen mit einem Schmelzpunkt von wenigstens 125°C, vorzugsweise wenigstens einem Polyethylen mit hoher Dichte, einem Polypropylen, einem Propylen/Ethylen-Copolymeren oder Mischungen aus wenigstens zwei der genannten Polymeren aufgebaut ist.

5. Ein Verbund nach einem der Ansprüche 1 bis 4, **dadurch gekennzeichnet, dass** das Release-Additiv in der Schicht a) bzw. der Schicht g) in einer Menge von 1 - 20 Gew.-%, vorzugsweise 2 - 15 Gew.-%, besonders bevorzugt 2 - 6 Gew.-%, bezogen auf das Gesamtgewicht der jeweiligen Schicht, vorliegt.

6. Ein Verbund nach einem der Ansprüche 1 bis 5, **dadurch gekennzeichnet, dass** die Release-Additiv-haltigen Schichten unterschiedliche Mengen an Release-Additive oder jeweils dieselbe Menge Release-Additiv, enthalten.

7. Ein Verbund nach einem der Ansprüche 1 bis 6, **dadurch gekennzeichnet, dass** das Release-Additiv wenigstens eine wachsartige Verbindung ausgewählt aus der Gruppe umfassend Fettsäuren, Fettalkohole, langkettige Amine, Fettsäure-Estern, Fettsäure-Amide ist, deren Erweichungs- bzw. Schmelzpunkt bei Normaldruck bei mindestens 30°C, vorzugsweise mindestens 50°C, besonders bevorzugt mindestens 80°C, ganz besonders bevorzugt bei mindestens 100°C, liegt.

8. Ein Verbund nach einem der Ansprüche 1 bis 7, **dadurch gekennzeichnet, dass** die Schicht c) aus wenigstens einem thermoplastischen, aliphatischen, teilaromatischen oder aromatischen Polyamid-Homo- oder Copolymeren, vorzugsweise aus wenigstens einem Polyamid ausgewählt aus der Gruppe umfassend Polyamide aus Lactamen mit 4 bis 10 C-Atomen, Polyamide aus aliphatischen Diaminen mit 2 bis 10 C-Atomen oder aromatische Diamine mit 6 bis 10 C-Atomen und aliphatischen oder aromatischen Dicarbonsäuren mit 6 bis 14 C-Atomen und Mischungen aus wenigstens zwei der genannten Polyamide aufgebaut ist.

9. Ein Verbund nach einem der Ansprüche 1 bis 8, **dadurch gekennzeichnet, dass** die Schichten a), e), und e') jeweils aus denselben thermoplastischen Homo- oder Copolymeren von α, β ungesättigten Olefinen aufgebaut sind.

10. Ein Verbund nach einem der Ansprüche 1 bis 9, **dadurch gekennzeichnet, dass** die Schichten a), e) und e') jeweils eine identische Schichtdicke aufweisen.

11. Ein Verbund nach einem der Ansprüche 1 bis 10, **dadurch gekennzeichnet, dass** die Release-Schicht g) bzw. g') aus wenigstens einem thermoplastischen Polyester ausgewählt aus der Gruppe umfassend thermoplastische, aliphatische, teilaromatische oder aromatische Homo- oder Copolyester, vorzugsweise Polybutylenadipat, Polyethylenterephthalat, Polybutylenterephthalat oder Polyethylenisophathalat aufgebaut ist.

12. Ein Verbund nach einem der Ansprüche 1 bis 11, **dadurch gekennzeichnet, dass** die lösbare Trennfolie II auf der Schicht e) bzw. der Schicht g') eine Release-Beschichtung basierend auf einem ausgehärteten Polysiloxan aufweist.

13. Ein Verbund nach einem der Ansprüche 1 bis 12, **dadurch gekennzeichnet, dass** der Verbund verpackt und vorzugsweise unter 20°C gekühlt, mindestens ein halbes Jahr lagerstabil ist.

14. Verwendung eines Verbundes nach einem der Ansprüche 1 bis 13 zur Herstellung eines Faserverbundwerkstoffes, vorzugsweise eines daraus gefertigten Konstruktionsbauteils für Windräder, Flugzeuge, Schiffe, Züge, Sportartikeln oder Sportgeräten.

## Claims

1. A composite made of
I a prepreg made of a solid mixture of a reactive synthetic resin and a reinforcing material in the form of textile or of fibres and optionally conventional additives in the form of an optionally rolled-up, continuous web and
II a separable release film comprising a multilayer structure made of
a) directly adjoining the prepreg web, a release layer composed of at least one thermoplastic homo- or copolymer of α,β-unsaturated olefins preferably having from 2 to 10 carbon atoms, particularly preferably of α,β-unsaturated olefins having at least 3 carbon atoms, a waxy compound as release additive, and optionally conventional other additives and auxiliaries,
b) optionally an adhesion-promoter layer,
c) a layer composed of at least one thermoplastic polyamide homo- or copolymer,
d) optionally an adhesion-promoter layer,
e) a release layer which is composed of at least one thermoplastic homo- or copolymer of α,β-unsaturated olefins preferably having from 2 to 10 carbon atoms, particularly preferably of α,β-unsaturated olefins having at least 3 carbon atoms, and which has a release coating based on a hardened polysiloxane, or as alternative to the layer e) a part-laminate made of
e') a layer composed of at least one thermoplastic homo- or copolymer of α,β-unsaturated olefins preferably having from 2 to 10 carbon atoms, particularly preferably of α,β-unsaturated olefins having at least 3 carbon atoms,
f) a lamination adhesive layer, and
g) a preferably biaxially stretched release layer which is composed of at least one thermoplastic polyester and one waxy compound as release additive, and optionally conventional other additives and auxiliaries, or
g') a preferably biaxially stretched release layer which is composed of at least one thermoplastic polyester, and which has a release coating based on a cured polysiloxane as alternative to the layer g) of the part-laminate.

2. A composite according to Claim 1, **characterized in that** the prepreg I is composed of a solid mixture of a reactive synthetic resin and a reinforcing material in form of textile or fibres, and conventional additives.

3. A composite according to Claim 1 or 2, **characterized in that** the prepreg I is composed of a solid mixture of a reactive synthetic resin, preferably of a reactive thermoset synthetic resin, particularly preferably a reactive epoxy resin, reactive unsaturated polyester resin, reactive polyurethane resin, or reactive phenolformaldehyde resin, and a reinforcing material made of textile glass, preferably staple fibres or rovings, carbon fibres or aramid fibres, additives as reactive agents, preferably crosslinking agents, accelerator, catalysts, and optionally α,β-unsaturated monomers, and optionally fillers.

4. A composite according to any of Claims 1 to 3, **characterized in that** each of the release layer a), the layer e), and the layer e') is composed of at least one thermoplastic homo- or copolymer of α,β-unsaturated olefins with melting point at least 125°C, preferably at least one high-density polyethylene, polypropylene, propylene/ ethylene copolymer, or a mixture of at least two of the polymers mentioned.

5. A composite according to any of Claims 1 to 4, **characterized in that** the amount of the release additive present in the layer a) and, respectively, the layer g) is from 1 to 20% by weight, preferably from 2 to 15% by weight, particularly preferably from 2 to 6% by weight, based on the total weight of the respective layer.

6. A composite according to any of Claims 1 to 5, **characterized in that** each of the layers comprising release additive comprises a different amount of release additive, or comprises the same amount of release additive.

7. A composite according to any of Claims 1 to 6, **characterized in that** the release additive is at least one waxy compound selected from the group comprising fatty acids, fatty alcohols, long-chain amines, fatty acid esters, and fatty acid amides, whose softening point or melting point at atmospheric pressure is at least 30°C, preferably at least 50°C, particularly preferably at least 80°C, very particularly preferably at least 100°C.

8. A composite according to any of Claims 1 to 7, **characterized in that** the layer c) is composed of at least one thermoplastic, aliphatic, semiaromatic, or aromatic polyamide homo- or copolymer, preferably of at least one polyamide selected from the group comprising polyamides made of lactams having from 4 to 10 carbon atoms, polyamides made of aliphatic diamines having from 2 to 10 carbon atoms or of aromatic diamines having from 6 to 10 carbon atoms and of aliphatic or aromatic dicarboxylic acids having from 6 to 14 carbon atoms, and mixtures of at least two of the polyamides mentioned.

9. A composite according to any of Claims 1 to 8, **characterized in that** each of the layers a), e), and e') is composed of the same thermoplastic homo- or copolymers of α,β-unsaturated olefins.

10. A composite according to any of Claims 1 to 9, **characterized in that** the thickness of each of the layers a), e), and e') is identical.

11. A composite according to any of Claims 1 to 10, **characterized in that** the release layer g) and, respectively, g') is composed of at least one thermoplastic polyester selected from the group comprising thermoplastic, aliphatic, semiaromatic, or aromatic homo- and copolyesters, preferably polybutylene adipate, polyethylene terephthalate, polybutylene terephthalate or polyethylene isophthalate.

12. A composite according to any of Claims 1 to 11, **characterized in that** the separable release film II has, on the layer e), and, respectively, the layer g'), a release coating based on a cured polysiloxane.

13. A composite according to any of Claims 1 to 12, **characterized in that** after packaging and preferably cooling below 20°C the composite has a shelflife of at least 6 months.

14. A use of the composite according to any of Claims 1 to 13 for the production of a fibre-composite material, and preferably of a structural component manufactured therefrom for wind turbines, aircraft, ships, rail vehicles, sports products, or sports equipment.

## Revendications

1. Composite constitué par
I un préimprégné constitué par un mélange solide d'une résine synthétique réactive et d'un agent de renforcement sous la forme d'un tissu ou d'une fibre et éventuellement d'additifs usuels sous la forme d'une bande continue, éventuellement enroulée, et
II une feuille de séparation amovible comprenant une structure multicouche constituée par
a) une couche antiadhésive directement adjacente à la bande de préimprégné, constituée par au moins un homo- ou copolymère thermoplastique d'oléfines α,β-insaturées contenant de préférence 2 à 10 atomes C, de manière particulièrement préférée d'oléfines α,β-insaturées contenant au moins 3 atomes C, un composé cireux en tant qu'additif antiadhésif et éventuellement d'autres additifs et adjuvants usuels,
b) éventuellement une couche de promoteur d'adhésion,
c) une couche constituée par au moins un homo- ou copolymère de polyamide thermoplastique,
d) éventuellement une couche de promoteur d'adhésion,
e) une couche antiadhésive, qui est constituée par au moins un homo- ou copolymère thermoplastique d'oléfines α,β-insaturées contenant de préférence 2 à 10 atomes C, de manière particulièrement préférée d'oléfines α,β-insaturées contenant au moins 3 atomes C, et un revêtement antiadhésif à base d'un polysiloxane durci, ou
en variante de la couche e), une couche composite partielle constituée par
e') une couche constituée par au moins un homo- ou copolymère thermoplastique d'oléfines α,β-insaturées contenant de préférence 2 à 10 atomes C, de manière particulièrement préférée d'oléfines α,β-insaturées contenant au moins 3 atomes C,
f) une couche adhésive stratifiée et
g) une couche antiadhésive de préférence orientée biaxialement, qui est constituée par au moins un polyester thermoplastique et un composé cireux en tant qu'additif antiadhésif et éventuellement d'autres additifs et adjuvants usuels, ou
g') une couche antiadhésive de préférence orientée biaxialement, qui est constituée par au moins un polyester thermoplastique et comprend un revêtement antiadhésif à base d'un polysiloxane durci en variante de la couche g) de la couche composite partielle.

2. Composite selon la revendication 1, **caractérisé en ce que** le préimprégné I est constitué par un mélange solide d'une résine synthétique réactive et d'un agent de renforcement sous la forme d'un tissu ou d'une fibre et d'additifs usuels.

3. Composite selon la revendication 1 ou 2, **caractérisé en ce que** le préimprégné I est constitué par un mélange solide d'une résine synthétique réactive, de préférence d'une résine synthétique duroplastique réactive, de manière particulièrement préférée d'une résine d'époxyde réactive, d'une résine de polyester insaturé réactive, d'une résine de polyuréthane réactive ou d'une résine de phénol-formaldéhyde réactive, et d'un agent de renforcement en verre textile, de préférence en fibres discontinues ou stratifils, en fibres de carbone ou en fibres d'aramide, d'additifs sous la forme d'agents de réaction, de préférence d'agent de réticulation, d'accélérateurs de durcissement, de catalyseurs et éventuellement de monomères α,β-insaturés, et éventuellement de charges.

4. Composite selon l'une quelconque des revendications 1 à 3, **caractérisé en ce que** la couche antiadhésive a), la couche e) et la couche e') sont chacune constituées par au moins un homo- ou copolymère thermoplastique d'oléfines α,β-insaturées ayant un point de fusion d'au moins 125 °C, de préférence au moins un polyéthylène ayant une densité élevée, un polypropylène, un copolymère de propylène/éthylène ou des mélanges d'au moins deux des polymères cités.

5. Composite selon l'une quelconque des revendications 1 à 4, **caractérisé en ce que** l'additif antiadhésif est présent dans la couche a) ou la couche g) en une quantité de 1 à 20 % en poids, de préférence de 2 à 15 % en poids, de manière particulièrement préférée de 2 à 6 % en poids, par rapport au poids total de la couche en question.

6. Composite selon l'une quelconque des revendications 1 à 5, **caractérisé en ce que** les couches contenant un additif antiadhésif contiennent différentes quantités d'additifs antiadhésifs ou contiennent chacune la même quantité d'additif antiadhésif.

7. Composite selon l'une quelconque des revendications 1 à 6, **caractérisé en ce que** l'additif antiadhésif est au moins un composé cireux choisi dans le groupe comprenant les acides gras, les alcools gras, les amines à chaîne longue, les esters d'acides gras, les amides d'acides gras, dont le point de ramollissement ou de fusion à pression normale est d'au moins 30 °C, de préférence d'au moins 50 °C, de manière particulièrement préférée d'au moins 80 °C, de manière tout particulièrement préférée d'au moins 100 °C.

8. Composite selon l'une quelconque des revendications 1 à 7, **caractérisé en ce que** la couche c) est constituée par au moins un homo- ou copolymère de polyamide thermoplastique, aliphatique, partiellement aromatique ou aromatique, de préférence par au moins un polyamide choisi dans le groupe comprenant les polyamides de lactames contenant 4 à 10 atomes C, les polyamides de diamines aliphatiques contenant 2 à 10 atomes C ou de diamines aromatiques contenant 6 à 10 atomes C et d'acides dicarboxyliques aliphatiques ou aromatiques contenant 6 à 14 atomes C et les mélanges d'au moins deux des polyamides cités.

9. Composite selon l'une quelconque des revendications 1 à 8, **caractérisé en ce que** les couches a), e) et e') sont chacune constituées par les mêmes homo- ou copolymères thermoplastiques d'oléfines α,β-insaturées.

10. Composite selon l'une quelconque des revendications 1 à 9, **caractérisé en ce que** les couches a), e) et e') présentent chacune une épaisseur de couche identique.

11. Composite selon l'une quelconque des revendications 1 à 10, **caractérisé en ce que** la couche antiadhésive g) ou g') est constituée par au moins un polyester thermoplastique choisi dans le groupe comprenant les homo- ou copolyesters thermoplastiques, aliphatiques, partiellement aromatiques ou aromatiques, de préférence le polyadipate de butylène, le polytéréphtalate d'éthylène, le polytéréphtalate de butylène ou le polyisophtalate d'éthylène.

12. Composite selon l'une quelconque des revendications 1 à 11, **caractérisé en ce que** la feuille de séparation amovible II sur la couche e) ou la couche g') comprend un revêtement antiadhésif à base d'un poysiloxane durci.

13. Composite selon l'une quelconque des revendications 1 à 12, **caractérisé en ce que** le composite emballé et de préférence refroidi à moins de 20 °C est stable au stockage pendant au moins une demi-année.

14. Utilisation d'un composite selon l'une quelconque des revendications 1 à 13 pour la fabrication d'un matériau composite fibreux, de préférence d'un composant de construction fabriqué à partir de celui-ci pour aéromoteurs, avions, navires, trains, articles de sport ou appareils de sport.
